# EUROPÄISCHE PATENTSCHRIFT

(11) **EP 3 658 956 B1**
(45) Veröffentlichungstag und Bekanntmachung des Hinweises auf die Patenterteilung: **06.07.2022**
(21) Anmeldenummer: 18745578.7
(22) Anmeldetag: 23.07.2018
(51) Int. Cl.: G01S 17/42, G01S 17/931, G01S 7/481

(54) **LIDAREINHEIT MIT MONTAGEELEMENT ZUR ANBRINGUNG VON SENDERMODUL UND EMPFÄNGERMODUL**
LIDAR UNIT HAVING MOUNTING ELEMENT FOR ATTACHING TRANSMITTER MODULE AND RECEIVER MODULE
UNITÉ LIDAR AVEC ÉLÉMENT DE MONTAGE POUR LA POSE D'UN MODULE ÉMETTEUR ET D'UN MODULE RÉCEPTEUR

(30) Priorität: 24.07.2017 DE 102017116595
(43) Veröffentlichungstag der Anmeldung: 03.06.2020
(73) Patentinhaber: Valeo Schalter und Sensoren GmbH, 74321 Bietigheim-Bissingen (DE)
(72) Erfinder: POPESCU, Sorin, 74321 Bietigheim-Bissingen (DE); HORVATH, Peter, 74321 Bietigheim-Bissingen (DE); SCHULER, Thomas, 74321 Bietigheim-Bissingen (DE)
(74) Vertreter: Pothmann, Karsten
(86) Internationale Anmeldenummer: PCT/EP2018/069932
(87) Internationale Veröffentlichungsnummer: WO 2019/020570

(56) Entgegenhaltungen:
- EP-A1- 3 159 712
- EP-B1- 2 795 362
- US-A- 5 706 140
- US-A- 5 959 734
- US-A1- 2013 135 604

## Beschreibung

Die vorliegende Erfindung betrifft eine Lidareinheit, insbesondere Laserscanner, zur laserbasierten Entfernungsmessung für ein Fahrzeug mit einem Sendermodul, welches ausgeführt ist, einen Laserstrahl zu emittieren, und einem Empfängermodul, welches ausgeführt ist, eine Reflektion des emittierten Laserstrahls zu empfangen.

Auch betrifft die vorliegende Erfindung ein Verfahren zur Montage einer Lidareinheit, insbesondere eines Laserscanners, zur laserbasierten Entfernungsmessung für ein Fahrzeug.

Lidareinheiten werden oftmals als Umgebungssensoren für Fahrassistenzsysteme in verschiedenen Fahrzeugen verwendet. Mit den Lidareinheiten werden somit Gegenstände und Personen in der Umgebung des Fahrzeugs erfasst, um die Sicherheit des Fahrzeugs und auch beispielsweise von anderen Verkehrsteilnehmern in dessen Umgebung zu erhöhen.

Der Begriff Lidar stammt aus dem englischen und ist eine Abkürzung für "light detection and ranging". Lidar ist eine dem Radar verwandte Methode, wobei bei dem Lidar Laserstrahlen verwendet werden, statt der beim Radar verwendeten Radiowellen. Lidar ist neben der Abstandsmessung auch zur Geschwindigkeitsmessung geeignet. Dazu werden Reflektionen des Laserstrahls an dem Gegenstand ausgewertet. In beiden Fällen werden Laufzeiten eines Laserstrahls zu dem Gegenstand und wieder zurück ermittelt, um daraus den Abstand zu dem Gegenstand zu bestimmen.

Neben der Laufzeit kann zusätzlich eine Intensität des reflektierten Laserstrahls erfasst werden. Darüber können Reflektionseigenschaften des Gegenstands, an dem der Laserstrahl reflektiert wird, bestimmt werden, um den Gegenstand mit mehr Details zu erfassen.

Bei einem Laserscanner erfolgt ein zeilen- oder rasterartiges Überstreichen von einer Umgebung mit einem Laserstrahl. Dadurch kann die Umgebung zuverlässig abgetastet werden, um dort Gegenstände zu erfassen. Dazu wird der Laserstrahl entsprechend abgelenkt, um einen Erfassungsbereich, auch field of view genannt, vollständig abtasten zu können.

Ein Laserscanner, der neben den Abständen zusätzlich die Intensität des reflektierten Signals erfasst, wird allgemein abbildender Laserscanner genannt. Die Aufnahme der Intensitätswerte des von den aufgenommenen Oberflächen reflektierten Laserlichtes erfolgt bei heutigen abbildenden Laserscannern beispielsweise in 16-bit-Graustufen. Im Ergebnis liefert der abbildende Laserscanner ein Abbild der Umgebung ähnlich dem eines Schwarzweißfotos.

Bei aktuellen Lidareinheiten wird die Sende- und Empfangsstrahl zueinander justiert, um Parallelität, bzw. einen Schnittpunkt der Strahlen zueinander einzustellen. Dabei ist eine hohe Genauigkeit erforderlich, um Winkelauflösungen in einem Bereich von weniger als einem Grad, typischerweise von etwa 0,1 Grad, zu erreichen. Dadurch ist die Justierung aufwendig und kostenintensiv.

In diesem Zusammenhang ist aus der EP 2 795 362 B1 ein Justageverfahren und ein zugehöriges Aufbaukonzept für einen optoelektronischen Entfernungsmesser bekannt. Der Entfernungsmesser weist eine Baugruppe mit einer Strahlungsquelle zum Aussenden einer optischen Sendestrahlung, einen Detektor zum Empfangen einer optischen Empfangsstrahlung und eine Leiterplatte auf, welche in starrer örtlicher Beziehung zueinander angeordnet sind, sowie einen Optikträger mit einer Sendeoptik und einer Empfangsoptik. Dabei werden durch die Strahlungsquelle sowie die Sendeoptik eine Senderichtung und durch den Detektor sowie die Empfangsoptik eine Empfangsrichtung definiert. Ferner weisen die Sendeoptik und die Empfangsoptik unterschiedliche Brennweiten auf. Das Justageverfahren stellt eine angestrebte Ausrichtung der Senderichtung gegenüber der der Empfangsrichtung her. Dabei erfolgt ein Justieren durch ein Verschieben der gesamten Baugruppe gegenüber dem Optikträger, wobei das Verschieben durch eine Hebelwirkung der unterschiedlichen Brennweiten jeweils unterschiedlich große, verschiebungsbedingte Richtungswinkeländerungen von Senderichtung und Empfangsrichtung bewirkt, wodurch die Ausrichtung der Senderichtung gegenüber der Empfangsrichtung variiert wird.

In der US 5 959 734 A wird eine Entfernungsmessvorrichtung offenbart, welche abtastend bzw. scannend einen Laserstrahl aussendet, von einem Objekt reflektiertes Licht empfängt, und eine Entfernung zum Objekt erfasst.

In der US 5 706 140 A wird eine Vorrichtung zur optischen Entfernungsmessung offenbart, in der Licht von einem Lichtemissionselement zu einem Gegenstand durch eine Lichttransmissionslinse transmittiert wird, und das von dem Gegenstand reflektierte Licht von einem Lichtempfangselement durch eine Lichtempfangslinse empfangen wird, so dass eine Entfernung zu dem Gegenstand auf Basis der Lichttransmissionszeit gemessen wird.

In der EP 3 159 712 A1 wird ein Verfahren zum Verbinden einer Senderbaugruppe und einer Empfängerbaugruppe in einer Rahmenstruktur zu einer Sende- und Empfangskombination einer abtastenden optoelektronischen Detektionseinrichtung offenbart.

In der US 2013/135604 A1 wird eine Messeinrichtung zur Messung einer Distanz zwischen einer Referenzmarke und einem Zielobjekt offenbart.

Ausgehend von dem oben genannten Stand der Technik liegt der Erfindung somit die Aufgabe zugrunde, eine Lidareinheit, insbesondere Laserscanner, zur laserbasierten Entfernungsmessung für ein Fahrzeug sowie ein Verfahren zur Montage einer Lidareinheit, insbesondere eines Laserscanners, zur laserbasierten Entfernungsmessung für ein Fahrzeug anzugeben, die eine einfache Montage und Bereitstellung der Lidareinheit zur Erzielung einer hohen Genauigkeit bei einer Erfassung einer Umgebung ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit eine Lidareinheit, insbesondere Laserscanner, zur laserbasierten Entfernungsmessung für ein Fahrzeug angegeben mit einem Sendermodul, welches ausgeführt ist, einen Laserstrahl zu emittieren, und einem Empfängermodul, welches ausgeführt ist, eine Reflektion des emittierten Laserstrahls zu empfangen, die Lidareinheit ein Montageelement aufweist zur Anbringung des Sendermoduls und des Empfängermoduls, das Montageelement und das Sendermodul korrespondierende erste Anschlagflächen zur Ausrichtung des Sendermoduls an dem Montageelement aufweisen, das Montageelement und das Empfängermodul korrespondierende zweite Anschlagflächen zur Ausrichtung des Empfängermoduls an dem Montageelement aufweisen, das Sendermodul bezogen auf seine erste Anschlagfläche vorkalibriert ist, und das Empfängermodul bezogen auf seine zweite Anschlagfläche vorkalibriert ist, wobei die ersten Anschlagflächen und/oder die zweiten Anschlagflächen jeweils mehrere korrespondierende Flächenabschnitte aufweisen, die mit einem Winkel zueinander oder in mehreren parallelen Ebenen angeordnet sind.

Erfindungsgemäß ist außerdem ein Verfahren zur Montage einer Lidareinheit, insbesondere eines Laserscanners, zur laserbasierten Entfernungsmessung für ein Fahrzeug angegeben, umfassend die nachfolgenden Schritte Bereitstellen eines Sendermoduls, welches ausgeführt ist, einen Laserstrahl zu emittieren, Bereitstellen eines Empfängermoduls, welches ausgeführt ist, eine Reflektion des emittierten Laserstrahls zu empfangen, Bereitstellen eines Montageelements zur Anbringung des Sendermoduls und des Empfängermoduls, Anbringen des Sendermoduls an dem Montageelement, wobei korrespondierende erste Anschlagflächen des Sendermoduls und des Montageelements miteinander in Anlage gebracht werden, Anbringen des Empfängermoduls an dem Montageelement, wobei korrespondierende zweite Anschlagflächen des Empfängermoduls und des Montageelements miteinander in Anlage gebracht werden, Vorkalibrieren des Sendermoduls bezogen auf die erste Anschlagfläche, und Vorkalibrieren des Empfängermoduls bezogen auf die zweite Anschlagfläche, wobei die ersten Anschlagflächen und/oder die zweiten Anschlagflächen jeweils mehrere korrespondierende Flächenabschnitte aufweisen, die mit einem Winkel zueinander oder in mehreren parallelen Ebenen angeordnet sind.

Grundidee der vorliegenden Erfindung ist es also, eine Kalibrierung von Sendermodul und Empfängermodul zueinander überflüssig zu machen, indem eine Montage der beiden Module an den jeweiligen Anschlagflächen erfolgt. Durch die Ausrichtung der korrespondierenden ersten bzw. zweiten Anschlagflächen ergibt sich automatisch eine Justierung von Sendermodul und Empfängermodul relativ zueinander im montierten Zustand. Fehler bei der Justierung liegen lediglich im Bereich von Fertigungstoleranzen bei der Fertigung des Montageelements, des Sendermoduls und des Empfängermoduls. Dabei ist insbesondere eine Toleranz bei der Fertigung der ersten bzw. zweiten Anschlagflächen wichtig, da über die ersten bzw. zweiten Anschlagflächen die Ausrichtung des Sendermoduls und des Empfängermoduls relativ zueinander erfolgt. Die Ausrichtung der ersten bzw. zweiten Anschlagflächen definiert also eine Referenzposition, in der ausgehend von der Vorkalibrierung des Sendermoduls und des Empfängermoduls eine Kalibrierung der Lidareinheit im montierten Zustand entfallen kann.

Die Vorkalibrierung ist insbesondere für das Sendermodul wichtig, um eine korrekte Abtastung eines Sichtfelds der Lidareinheit zu erreichen. Das Empfängermodul ist üblicherweise weniger winkelsensitiv, so dass der Empfang der Reflektionen des von dem Sendermodul emittierten Laserstrahls eine weniger genaue Ausrichtung des Empfängermoduls erfordert.

Die korrespondierenden ersten bzw. zweiten Anschlagflächen umfassen jeweils ein paar Anschlagflächen, von denen eine an dem Montageelement und die andere entsprechend an dem Sendermodul bzw. dem Empfängermodul ausgebildet ist.

In vorteilhafter Ausgestaltung der Erfindung sind die ersten Anschlagflächen und/oder die zweiten Anschlagflächen als jeweils im Wesentlichen ebene Anschlagflächen ausgeführt. Die ersten Anschlagflächen und/oder die zweiten Anschlagflächen können somit beispielsweise als ebene Flansche ausgeführt sein. Prinzipiell kann die ebene Anschlagfläche auch durch eine Mehrzahl Stützpunkte definiert sein, die die Ebene aufspannen.

In vorteilhafter Ausgestaltung der Erfindung liegen die erste Anschlagfläche und die zweite Anschlagfläche des Montageelements im Wesentlichen in einer gemeinsamen Ebene. Es wird also eine durchgehende, gemeinsame Anschlagfläche an dem Montageelement gebildet, die die erste und die zweite Anschlagfläche umfasst. Dadurch können die beiden Module an dieser gemeinsamen Anschlagfläche ausgerichtet werden. Die Ausrichtung der beiden Module an dem Montageelement kann dadurch auf eine einfache Weise durchgeführt werden.

Erfindungsgemäß weisen die ersten Anschlagflächen und/oder die zweiten Anschlagflächen jeweils mehrere korrespondierende Flächenabschnitte auf, die mit einem Winkel zueinander oder in mehreren parallelen Ebenen angeordnet sind. Die ersten bzw. zweiten Anschlagflächen können somit eine an sich beliebige, korrespondierende Form aufweisen. So können die Anschlagflächen beispielsweise mehrere parallele Ebenen aufweisen. Eine entsprechende Ausführung der ersten bzw. zweiten Anschlagflächen kann beispielsweise genutzt werden, um nicht nur eine Ausrichtung in einer Ebene zu bewirken, sondern um zusätzlich in der Ebene bei der Montage automatisch eine Positionierung des Sendermoduls bzw. des Empfängermoduls zu bewirken. Beispielsweise können die ersten bzw. zweiten Anschlagflächen so ausgeführt bzw. angeordnet sein, dass sie automatisch eine Ausrichtung in mehreren Raumachsen, vorzugsweise in allen Raumachsen bewirken. Besonders bevorzugt sind die ersten bzw. zweiten Anschlagflächen so ausgeführt bzw. angeordnet, dass sie zusätzlich eine rotatorische Ausrichtung um die Raumachsen bewirken. Das Sendermodul bzw. das Empfängermodul können somit in bis zu sechs Freiheitsgeraden ausgerichtet werden.

Alternativ oder zusätzlich können auch die ersten Anschlagflächen und/oder die zweiten Anschlagflächen an dem Montageelement in zwei parallelen Ebenen angeordnet sein. Ein dazwischenliegender Übergang ist vorzugsweise zur Ausrichtung des Sendemoduls bzw. des Empfängermoduls ausgeführt.

In vorteilhafter Ausgestaltung der Erfindung ist das Montageelement als flacher Montagerahmen ausgeführt, und das Sendermodul und das Empfängermodul sind an dem Montagerahmen angeordnet. Dabei kann der Montagerahmen als kompaktes Bauteil bereitgestellt werden, um die Lidareinheit mit einer geringen Baugröße bereitzustellen. Der flache Montagerahmen weist gegenüber dem Sendermodul und/oder dem Empfängermodul eine geringe Tiefe auf.

In vorteilhafter Ausgestaltung der Erfindung weist der Montagerahmen einen umlaufenden Rahmen und eine Einsetzöffnung zur Aufnahme des Sendermoduls und/oder des Empfängermoduls auf. Sendermodul und/oder Empfängermodul können also innerhalb der Einsetzöffnung positioniert und gehalten werden. Dabei kann der Montagerahmen als kompaktes Bauteil bereitgestellt werden, um die Lidareinheit insgesamt mit einer geringen Baugröße bereitzustellen. Durch das Einsetzen des Sendermoduls und/oder des Empfängermoduls in die Einsetzöffnung wird eine einfach und stabile Verbindung mit dem Montagerahmen ermöglicht und die Ausrichtung des Sendermoduls und/oder des Empfängermoduls an dem Montagerahmen erleichtert.

In vorteilhafter Ausgestaltung der Erfindung weisen die ersten Anschlagflächen und/oder die zweiten Anschlagflächen korrespondierende Positionierelemente zur Ausrichtung des Sendermoduls und/oder des Empfängermoduls an dem Montageelement auf. Durch die korrespondierenden Positionierelemente können das Sendermodul und/oder das Empfängermodul zusätzlich zu der Ausrichtung in einer durch die Anschlagflächen definierten Ebene in weiteren Freiheitsgraden fest, zuverlässig und reproduzierbar an dem Montageelement ausgerichtet werden. Verschiedene Ausgestaltungen der korrespondierenden Positionierelemente sind möglich.

In vorteilhafter Ausgestaltung der Erfindung weisen die korrespondierenden Positionierelemente der ersten Anschlagflächen und/oder der zweiten Anschlagflächen entsprechende korrespondierende Positionierstifte und Positionieraufnahmen auf. Die Positionierstifte und Positionieraufnahmen weisen korrespondierende Abmessungen bzw. Umfangsformen auf, die eine exakte Ausrichtung des Sendermoduls und/oder des Empfängermoduls an dem Montageelement ermöglichen. Zusätzlich können die Positionierstifte und/oder Positionieraufnahmen ausgeführt sein, um ein Ausrichten des Sendermoduls und/oder des Empfängermoduls an dem Montageelement zu erleichtern oder automatisch durchzuführen. Dazu können die Positionierstifte beispielsweise eine konische Form aufweisen, und/oder die Positionieraufnahmen sind mit einer Trichterform ausgeführt. Entsprechend werden das Sendermodul und/oder das Empfängermodul beider Anbringung an dem Montageelement automatisch in ihre gewünschte Position geführt.

In vorteilhafter Ausgestaltung der Erfindung ist die erste Anschlagfläche des Sendermoduls durch erste Randbereiche des Sendermoduls gebildet. Die Ausbildung der ersten Anschlagfläche an den Randbereichen ermöglicht eine zuverlässige Positionierung und Abstützung, insbesondere wenn ein größtmöglicher Abstand zwischen den einzelnen Randbereichen besteht. Auch kann eine funktionale Einheit des Sendermoduls ohne Einschränkungen in einem Mittelbereich davon ausgebildet sein.

In vorteilhafter Ausgestaltung der Erfindung ist die zweite Anschlagfläche des Empfängermoduls durch zweite Randbereiche des Empfängermoduls gebildet. Die Ausbildung der ersten Anschlagfläche an den Randbereichen ermöglicht eine zuverlässige Positionierung und Abstützung, insbesondere wenn ein größtmöglicher Abstand zwischen den einzelnen Randbereichen besteht. Auch kann eine funktionale Einheit des Empfängermoduls ohne Einschränkungen in einem Mittelbereich davon ausgebildet sein.

In vorteilhafter Ausgestaltung der Erfindung weist das Montageelement eine Mehrzahl Montagedurchlässe zur Anbringung der Lidareinheit an dem Fahrzeug auf. Durch die Montagedurchlässe kann die Lidareinheit über das Montageelement einfach an dem Fahrzeug montiert werden. Zusätzliche Ausgestaltungen des Sendermoduls oder des Empfängermoduls zur Montage an dem Fahrzeug sind nicht erforderlich. Die Montagedurchlässe können beispielsweise zur Durchführung von Stiften, Bolzen, Schrauben, Clipsverbindern oder anderen Montagemitteln verwendet werden, um die Lidareinheit zuverlässig an dem Fahrzeug zu montieren.

In vorteilhafter Ausgestaltung der Erfindung weist die Lidareinheit Befestigungsmittel zur Befestigung des Sendermoduls und/oder des Empfängermoduls auf. Durch die Befestigungsmittel können das Sendermodul und/oder das Empfängermodul nach der Positionierung befestigt werden für eine weitere Verwendung. Die Befestigungsmittel können beispielsweise Stifte, Bolzen, Schrauben, Clipsverbinder oder andere umfassen, die durch entsprechende Öffnungen des Montageelements und des Sendermoduls und/oder des Empfängermoduls geführt werden. Alternativ können die Befestigungsmittel integral mit dem Montageelement, dem Sendermodul und/oder dem Empfängermodul ausgeführt sein, um die Befestigung zu erleichtern.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragebar von einem Ausführungsbeispiel auf ein anderes.

Es zeigt
- Fig. 1: eine perspektivische Darstellung einer Lidareinheit mit einem Sendermodul und einem Empfängermodul, die an einem Montageelement angebracht sind, gemäß einer ersten, bevorzugten Ausführungsform in einer Rückansicht,
- Fig. 2: eine perspektivische Darstellung der Lidareinheit aus Fig. 1 mit dem an dem Montageelement angebrachten Empfängermodul, wobei das Sendermodul nicht dargestellt wurde, in Übereinstimmung mit der ersten Ausführungsform in einer Rückansicht,
- Fig. 3: eine perspektivische Darstellung des Empfängermoduls der Lidareinheit aus Fig. 1 in Übereinstimmung mit der ersten Ausführungsform in einer Vorderansicht, und
- Fig. 4: eine perspektivische Darstellung des Sendermoduls der Lidareinheit aus Fig. 1 in Übereinstimmung mit der ersten Ausführungsform in einer Rückansicht.

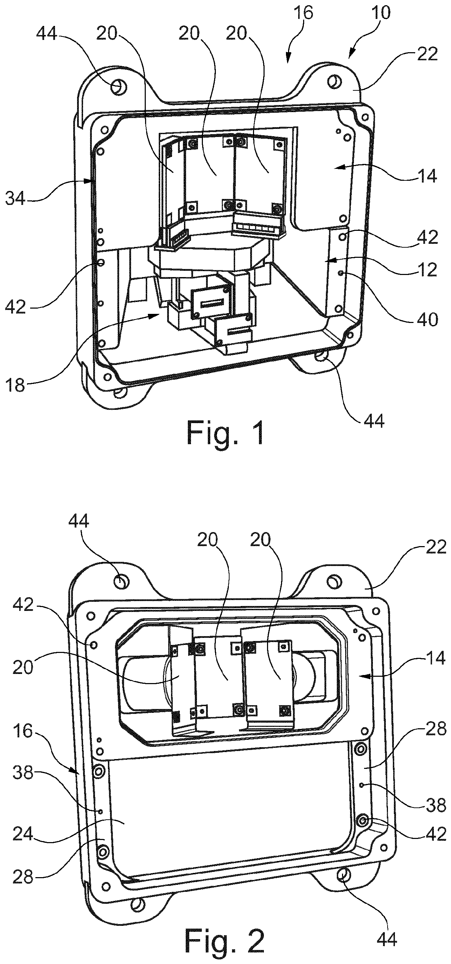

Die Figuren 1 bis 4 betreffen eine Lidareinheit 10 gemäß einer ersten, bevorzugten Ausführungsform.

Die Lidareinheit 10 ist hier als Laserscanner zur laserbasierten Entfernungsmessung für ein Fahrzeug ausgeführt. Der Laserscanner 10 umfasst ein Sendermodul 12, welches ausgeführt ist, einen Laserstrahl zu emittieren, und ein Empfängermodul 14, welches ausgeführt ist, eine Reflektion des emittierten Laserstrahls zu empfangen. Wie in Fig. 1 dargestellt ist, sind das Sendermodul 12 und das Empfängermodul 14 an einem Montageelement 16 angebracht.

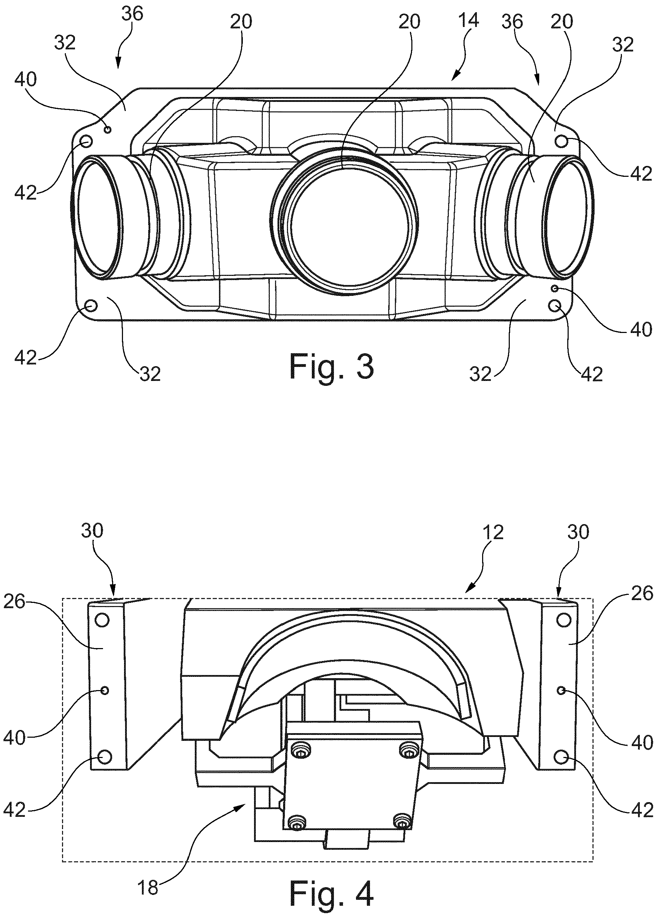

Das Sendermodul 12 umfasst eine Vorrichtung 18 zur Erzeugung und Ablenkung eines Laserstrahls, wie beispielsweise in Fig. 4 ersichtlich ist. Das Empfängermodul 14 umfasst hier drei einzelne Empfänger 20 zum Empfang von Reflektionen des emittierten Laserstrahls. Die drei Empfänger 20 sind in einer horizontalen Ebene angeordnet, um einen möglichst großen horizontalen Abtastbereich in Übereinstimmung mit der möglichen Auslenkung des Laserstrahls durch die Vorrichtung 18 zur Erzeugung und Ablenkung eines Laserstrahls zu erfassen.

Das Montageelement 16 ist hier als flacher Montagerahmen ausgeführt, an dem das Sendermodul 12 und das Empfängermodul 14 angeordnet sind. Der flache Montagerahmen 16 weist gegenüber dem Sendermodul 12 und dem Empfängermodul 14 eine geringe Tiefe auf. Der Montagerahmen 16 umfasst einen umlaufenden Rahmen 22 und eine Einsetzöffnung 24, in der das Sendermodul 12 und das Empfängermodul 14 aufgenommen sind. Das Sendermodul 12 und das Empfängermodul 14 sind also innerhalb der Einsetzöffnung 24 positioniert und gehalten, wie nachstehend im Detail erläutert wird.

Zur Anbringung des Sendermoduls 12 an dem Montageelement 16 weisen das Sendermodul 12 und der Montagerahmen 16 korrespondierende erste Anschlagflächen 26, 28 zur Ausrichtung des Sendermoduls 12 an dem Montagerahmen 16 auf. Die erste Anschlagfläche 26 des Sendermoduls 12 ist in den Darstellungen in den Figuren 1 und 4 nur von hinten dargestellt und wird durch erste Randbereiche 30 des Sendermoduls 12 gebildet. Die erste Anschlagfläche 28 des Montageelements 16 ist in Fig. 2 sichtbar. Die ersten Anschlagflächen 26, 28 sind hier als im Wesentlichen ebene Anschlagflächen 26, 28 ausgeführt.

Zur Anbringung des Empfängermoduls 14 an dem Montagerahmen 16 weisen das Empfängermodul 14 und der Montagerahmen 16 korrespondierende zweite Anschlagflächen 32, 34 zur Ausrichtung des Empfängermoduls 14 an dem Montagerahmen 16 auf. Die zweite Anschlagfläche 32 des Empfängermoduls 14 ist in der Darstellung in Figur 3 gezeigt und wird durch zweite Randbereiche 36 des Empfängermoduls 14 gebildet. Die zweite Anschlagfläche 34 des Montagerahmens 16 ist in den Figuren 1 und 2 nicht sichtbar und durch das Empfängermodul 14 verdeckt. Die zweiten Anschlagflächen 32, 34 sind hier als im Wesentlichen ebene Anschlagflächen 32, 34 ausgeführt.

Wie am besten in Fig. 2 gezeigt, liegen die erste Anschlagfläche 28 und die zweite Anschlagfläche 34 des Montagerahmens 16 im Wesentlichen in einer gemeinsamen Ebene, die die erste und die zweite Anschlagfläche 28, 34 des Montagerahmens 16 umfasst.

Die ersten und zweiten Anschlagflächen 26, 28, 32, 34 weisen korrespondierende Positionierelemente 38, 40 zur Ausrichtung des Sendermoduls 12 und des Empfängermoduls 14 an dem Montagerahmen 16 auf. Die Positionierelemente 38, 40 umfassen Positionieraufnahmen 38, die an den ersten und zweiten Anschlagflächen 28, 34 des Montagerahmens 16 ausgebildet sind, und Positionierstifte 40, die an den ersten Anschlagflächen 26 des Sendermoduls 12 und den zweiten Anschlagflächen 32 des Empfängermoduls 14 ausgebildet sind. Die Positionierelemente 38, 40 weisen korrespondierende Abmessungen und Umfangsformen auf, die eine exakte Ausrichtung des Sendermoduls 12 und/oder des Empfängermoduls 14 an dem Montagerahmen 16 bewirken.

An den ersten und zweiten Anschlagflächen 26, 28, 32, 34 des Sendermoduls 12, des Empfängermoduls 14 und des Montagerahmens 16 sind Öffnungen 42 ausgebildet, durch die hier nicht dargestellte Befestigungsmittel zur Befestigung des Sendermoduls 12 und des Empfängermoduls 14 an dem Montagerahmen 16 geführt werden können. Die Befestigungsmittel können beispielsweise Stifte, Bolzen, Schrauben, Clipsverbinder oder andere umfassen, die durch die Öffnungen 42 des Montagerahmens 16 und des Sendermoduls 12 bzw. des Empfängermoduls 14 geführt werden können.

Das Sendermodul 12 ist bezogen auf seine erste Anschlagfläche 26 vorkalibriert. Auch das Empfängermodul 14 ist bezogen auf seine zweite Anschlagfläche 32 vorkalibriert. Somit ergibt sich durch die Ausrichtung der korrespondierenden ersten bzw. zweiten Anschlagflächen 26, 28, 32, 34 automatisch eine Justierung von Sendermodul 12 und Empfängermodul 14 relativ zueinander im montierten Zustand. Die Ausrichtung der ersten bzw. zweiten Anschlagflächen 26, 28, 32, 34 definiert also eine Referenzposition, in der ausgehend von der Vorkalibrierung des Sendermoduls 12 und des Empfängermoduls 14 eine Kalibrierung der Lidareinheit 10 im montierten Zustand entfallen kann.

Weiter umfasst der Montagerahmen 16 eine Mehrzahl Montagedurchlässe 44 zur Anbringung der Lidareinheit 10 an dem Fahrzeug. Die Montagedurchlässe 44 sind zur Durchführung von Stiften, Bolzen, Schrauben, Clipsverbindern oder anderen Montagemitteln ausgeführt, um die Lidareinheit 10 an dem Fahrzeug zu montieren.

### Bezugszeichenliste

- 10: Lidareinheit
- 12: Sendermodul
- 14: Empfängermodul
- 16: Montageelement, Montagerahmen
- 18: Vorrichtung zur Erzeugung und Ablenkung eines Laserstrahls
- 20: Empfänger
- 22: Rahmen
- 24: Einsetzöffnung
- 26: erste Anschlagfläche des Sendermoduls
- 28: erste Anschlagfläche des Montageelements
- 30: erster Randbereich
- 32: zweite Anschlagfläche des Empfängermoduls
- 34: zweite Anschlagfläche des Montageelements
- 36: zweiter Randbereich
- 38: Positionieraufnahme, Positionierelement
- 40: Positionierstift, Positionierelement
- 42: Öffnung
- 44: Montagedurchlass

## Patentansprüche

1. Lidareinheit (10), insbesondere Laserscanner, zur laserbasierten Entfernungsmessung für ein Fahrzeug, mit
einem Sendermodul (12), welches ausgeführt ist, einen Laserstrahl zu emittieren, und
einem Empfängermodul (14), welches ausgeführt ist, eine Reflektion des emittierten Laserstrahls zu empfangen,
wobei die Lidareinheit (10) ein Montageelement (16) aufweist zur Anbringung des Sendermoduls (12) und des Empfängermoduls (14),
das Montageelement (16) und das Sendermodul (12) korrespondierende erste Anschlagflächen (26, 28) zur Ausrichtung des Sendermoduls (12) an dem Montageelement (16) aufweisen,
das Montageelement (16) und das Empfängermodul (14) korrespondierende zweite Anschlagflächen (32, 34) zur Ausrichtung des Empfängermoduls (14) an dem Montageelement (16) aufweisen,
das Sendermodul (12) bezogen auf seine erste Anschlagfläche (26) vorkalibriert ist, und
das Empfängermodul (14) bezogen auf seine zweite Anschlagfläche (32) vorkalibriert ist,
**dadurch gekennzeichnet, dass**
die ersten Anschlagflächen (26, 28) und/oder die zweiten Anschlagflächen (32, 34) jeweils mehrere korrespondierende Flächenabschnitte aufweisen, die mit einem Winkel zueinander oder in mehreren parallelen Ebenen angeordnet sind.

2. Lidareinheit (10) nach Anspruch 1, **dadurch gekennzeichnet, dass** die ersten Anschlagflächen (26, 28) und/oder die zweiten Anschlagflächen (32, 34) als jeweils im Wesentlichen ebene Anschlagflächen (26, 28, 32, 34) ausgeführt sind.

3. Lidareinheit (10) nach Anspruch 2, **dadurch gekennzeichnet, dass** die erste Anschlagfläche (28) und die zweite Anschlagfläche (34) des Montageelements (16) im Wesentlichen in einer gemeinsamen Ebene liegen.

4. Lidareinheit (10) nach einem der vorhergehenden Ansprüche, **dadurch gekennzeichnet, dass**
das Montageelement (16) als flacher Montagerahmen ausgeführt ist, und das Sendermodul (12) und das Empfängermodul (14) an dem Montagerahmen (16) angeordnet sind.

5. Lidareinheit (10) nach Anspruch 4, **dadurch gekennzeichnet, dass** der Montagerahmen (16) einen umlaufenden Rahmen (22) und eine Einsetzöffnung (24) zur Aufnahme des Sendermoduls (12) und/oder des Empfängermoduls (14) aufweist.

6. Lidareinheit (10) nach einem der vorhergehenden Ansprüche, **dadurch gekennzeichnet, dass**
die ersten Anschlagflächen (26, 28) und/oder die zweiten Anschlagflächen (32, 34) korrespondierende Positionierelemente (38, 40) zur Ausrichtung des Sendermoduls (12) und/oder des Empfängermoduls (14) an dem Montageelement (16) aufweisen.

7. Lidareinheit (10) nach Anspruch 6, **dadurch gekennzeichnet, dass** die korrespondierenden Positionierelemente (38, 40) der ersten Anschlagflächen (26, 28) und/oder der zweiten Anschlagflächen (32, 34) entsprechende korrespondierende Positionierstifte (40) und Positionieraufnahmen (38) aufweisen.

8. Lidareinheit (10) nach einem der vorhergehenden Ansprüche, **dadurch gekennzeichnet, dass**
die erste Anschlagfläche (26) des Sendermoduls (12) durch erste Randbereiche (30) des Sendermoduls (12) gebildet ist.

9. Lidareinheit (10) nach einem der vorhergehenden Ansprüche, **dadurch gekennzeichnet, dass**
die zweite Anschlagfläche (32) des Empfängermoduls (14) durch zweite Randbereiche (36) des Empfängermoduls (14) gebildet ist.

10. Lidareinheit (10) nach einem der vorhergehenden Ansprüche, **dadurch gekennzeichnet, dass**
das Montageelement (16) eine Mehrzahl Montagedurchlässe (44) zur Anbringung der Lidareinheit (10) an dem Fahrzeug aufweist.

11. Lidareinheit (10) nach einem der vorhergehenden Ansprüche, **dadurch gekennzeichnet, dass**
die Lidareinheit (10) Befestigungsmittel zur Befestigung des Sendermoduls (12) und/oder des Empfängermoduls (14) aufweist.

12. Verfahren zur Montage einer Lidareinheit (10), insbesondere eines Laserscanners, zur laserbasierten Entfernungsmessung für ein Fahrzeug, umfassend die nachfolgenden Schritte
Bereitstellen eines Sendermoduls (12), welches ausgeführt ist, einen Laserstrahl zu emittieren,
Bereitstellen eines Empfängermoduls (14), welches ausgeführt ist, eine Reflektion des emittierten Laserstrahls zu empfangen,
Bereitstellen eines Montageelements (16) zur Anbringung des Sendermoduls (12) und des Empfängermoduls (14),
Anbringen des Sendermoduls (12) an dem Montageelement (16), wobei korrespondierende erste Anschlagflächen (26, 28) des Sendermoduls (12) und des Montageelements (16) miteinander in Anlage gebracht werden,
Anbringen des Empfängermoduls (14) an dem Montageelement (16), wobei korrespondierende zweite Anschlagflächen (32, 34) des Empfängermoduls (14) und des Montageelements (16) miteinander in Anlage gebracht werden, Vorkalibrieren des Sendermoduls (12) bezogen auf die erste Anschlagfläche (26, 28), und
Vorkalibrieren des Empfängermoduls (14) bezogen auf die zweite Anschlagfläche (32, 34),
daduch gekenzeichnet, dass
die ersten Anschlagflächen (26, 28) und/oder die zweiten Anschlagflächen (32, 34) jeweils mehrere korrespondierende Flächenabschnitte aufweisen, die mit einem Winkel zueinander oder in mehreren parallelen Ebenen angeordnet sind.

## Claims

1. Lidar unit (10), in particular laser scanner, for laser-based distance measurement for a vehicle, with a transmitter module (12) designed to emit a laser beam, and
a receiver module (14) designed to receive a reflection of the emitted laser beam,
wherein the lidar unit (10) has a mounting element (16) for attaching the transmitter module (12) and the receiver module (14),
the mounting element (16) and the transmitter module (12) have corresponding first stop surfaces (26, 28) for alignment of the transmitter module (12) on the mounting element (16),
the mounting element (16) and the receiver module (14) have corresponding second stop surfaces (32, 34) for alignment of the receiver module (14) on the mounting element (16),
the transmitter module (12) is pre-calibrated with respect to its first stop surface (26), and
the receiver module (14) is pre-calibrated with respect to its second stop surface (32),
**characterized in that**
the first stop surfaces (26, 28) and/or the second stop surfaces (32, 34) each have a plurality of corresponding surface areas, which are arranged at an angle to one another or in a plurality of parallel planes.

2. Lidar unit (10) according to Claim 1, **characterized in that**
the first stop surfaces (26, 28) and/or the second stop surfaces (32, 34) are each implemented as substantially flat stop surfaces (26, 28, 32, 34).

3. Lidar unit (10) according to Claim 2, **characterized in that**
the first stop surface (28) and the second stop surface (34) of the mounting element (16) substantially lie in a common plane.

4. Lidar unit (10) according to any one of the preceding claims, **characterized in that**
the mounting element (16) is implemented as a flat mounting frame, and
the transmitter module (12) and the receiver module (14) are arranged on the mounting frame (16).

5. Lidar unit (10) according to Claim 4, **characterized in that**
the mounting frame (16) has a peripheral frame (22) and an insertion opening (24) for accommodating the transmitter module (12) and/or the receiver module (14).

6. Lidar unit (10) according to any one of the preceding claims, **characterized in that**
the first stop surfaces (26, 28) and/or the second stop surfaces (32, 34) have corresponding positioning elements (38, 40) for alignment of the transmitter module (12) and/or of the receiver module (14) on the mounting element (16).

7. Lidar unit (10) according to Claim 6, **characterized in that**
the corresponding positioning elements (38, 40) of the first stop surfaces (26, 28) and/or of the second stop surfaces (32, 34) have appropriate corresponding positioning pins (40) and positioning receptacles (38).

8. Lidar unit (10) according to any one of the preceding claims, **characterized in that**
the first stop surface (26) of the transmitter module (12) is formed by first edge areas (30) of the transmitter module (12).

9. Lidar unit (10) according to any one of the preceding claims, **characterized in that**
the second stop surface (32) of the receiver module (14) is formed by second edge areas (36) of the receiver module (14) .

10. Lidar unit (10) according to any one of the preceding claims, **characterized in that**
the mounting element (16) has a plurality of mounting passages (44) for attaching the lidar unit (10) to the vehicle.

11. Lidar unit (10) according to any one of the preceding claims, **characterized in that**
the lidar unit (10) has fasteners for fastening the transmitter module (12) and/or the receiver module (14).

12. Method for mounting a lidar unit (10), in particular a laser scanner, for laser-based distance measurement for a vehicle, comprising the following steps providing a transmitter module (12) designed to emit a laser beam,
providing a receiver module (14) designed to receive a reflection of the emitted laser beam,
providing a mounting element (16) for attaching the transmitter module (12) and the receiver module (14), attaching the transmitter module (12) to the mounting element (16), wherein corresponding first stop surfaces (26, 28) of the transmitter module (12) and of the mounting element (16) are brought into contact with each other,
attaching the receiver module (14) to the mounting element (16), wherein corresponding second stop surfaces (32, 34) of the receiver module (14) and of the mounting element (16) are brought into contact with each other, pre-calibrating the transmitter module (12) with respect to the first stop surface (26, 28), and pre-calibrating the receiver module (14) with respect to the second stop surface (32, 34),
**characterized in that**
the first stop surfaces (26, 28) and/or the second stop surfaces (32, 34) each have a plurality of corresponding surface areas, which are arranged at an angle to one another or in a plurality of parallel planes.

## Revendications

1. Unité lidar (10), notamment scanner laser, pour la mesure de distance à base de laser pour un véhicule, comprenant
un module émetteur (12), qui est conçu pour émettre un faisceau laser, et
un module récepteur (14), qui est conçu pour recevoir une réflexion du faisceau laser émis,
l'unité lidar (10) présentant un élément de montage (16) pour installer le module émetteur (12) et le module récepteur (14),
l'élément de montage (16) et le module émetteur (12) présentant des premières surfaces de butée correspondantes (26, 28) pour orienter le module émetteur (12) sur l'élément de montage (16),
l'élément de montage (16) et le module récepteur (14) présentant des deuxièmes surfaces de butée correspondantes (32, 34) pour orienter le module récepteur (14) sur l'élément de montage (16),
le module émetteur (12) étant pré-calibré par rapport à sa première surface de butée (26), et
le module récepteur (14) étant pré-calibré par rapport à sa deuxième surface de butée (32),
**caractérisée en ce que**
les premières surfaces de butée (26, 28) et/ou les deuxièmes surfaces de butée (32, 34) présentent chacune plusieurs sections de surface correspondantes, qui sont agencées selon un angle les unes par rapport aux autres ou dans plusieurs plans parallèles.

2. Unité lidar (10) selon la revendication 1, **caractérisée en ce que** les premières surfaces de butée (26, 28) et/ou les deuxièmes surfaces de butée (32, 34) sont réalisées respectivement sous forme de surfaces de butée essentiellement planes (26, 28, 32, 34).

3. Unité lidar (10) selon la revendication 2, **caractérisée en ce que** la première surface de butée (28) et la deuxième surface de butée (34) de l'élément de montage (16) se situent essentiellement dans un plan commun.

4. Unité lidar (10) selon l'une quelconque des revendications précédentes, **caractérisée en ce que** l'élément de montage (16) est réalisé sous la forme d'un cadre de montage plat, et le module émetteur (12) et le module récepteur (14) sont agencés sur le cadre de montage (16).

5. Unité lidar (10) selon la revendication 4, **caractérisée en ce que** le cadre de montage (16) présente un cadre périphérique (22) et une ouverture d'insertion (24) pour recevoir le module émetteur (12) et/ou le module récepteur (14).

6. Unité lidar (10) selon l'une quelconque des revendications précédentes, **caractérisée en ce que** les premières surfaces de butée (26, 28) et/ou les deuxièmes surfaces de butée (32, 34) présentent des éléments de positionnement correspondants (38, 40) pour orienter le module émetteur (12) et/ou le module récepteur (14) sur l'élément de montage (16).

7. Unité lidar (10) selon la revendication 6, **caractérisée en ce que** les éléments de positionnement correspondants (38, 40) des premières surfaces de butée (26, 28) et/ou des deuxièmes surfaces de butée (32, 34) présentent des broches de positionnement (40) et des logements de positionnement (38) correspondants.

8. Unité lidar (10) selon l'une quelconque des revendications précédentes, **caractérisée en ce que** la première surface de butée (26) du module émetteur (12) est formée par des premières zones de bord (30) du module émetteur (12).

9. Unité lidar (10) selon l'une quelconque des revendications précédentes, **caractérisée en ce que** la deuxième surface de butée (32) du module récepteur (14) est formée par des deuxièmes zones de bord (36) du module récepteur (14).

10. Unité lidar (10) selon l'une quelconque des revendications précédentes, **caractérisée en ce que** l'élément de montage (16) présente une pluralité de passages de montage (44) pour installer l'unité lidar (10) sur le véhicule.

11. Unité lidar (10) selon l'une quelconque des revendications précédentes, **caractérisée en ce que** l'unité lidar (10) présente des moyens de fixation pour fixer le module émetteur (12) et/ou le module récepteur (14) .

12. Procédé de montage d'une unité lidar (10), notamment d'un scanner laser, pour la mesure de distance à base de laser pour un véhicule, comprenant les étapes suivantes
la fourniture d'un module émetteur (12), qui est conçu pour émettre un faisceau laser,
la fourniture d'un module récepteur (14), qui est conçu pour recevoir une réflexion du faisceau laser émis,
la fourniture d'un élément de montage (16) pour installer le module émetteur (12) et le module récepteur (14),
l'installation du module émetteur (12) sur l'élément de montage (16), des premières surfaces de butée correspondantes (26, 28) du module émetteur (12) et de l'élément de montage (16) étant mises en application l'une avec l'autre,
l'installation du module récepteur (14) sur l'élément de montage (16), des deuxièmes surfaces de butée correspondantes (32, 34) du module récepteur (14) et de l'élément de montage (16) étant mises en application l'une avec l'autre,
le pré-calibrage du module émetteur (12) par rapport à la première surface de butée (26, 28), et
le pré-calibrage du module récepteur (14) par rapport à la deuxième surface de butée (32, 34),
**caractérisé en ce que**
les premières surfaces de butée (26, 28) et/ou les deuxièmes surfaces de butée (32, 34) présentent chacune plusieurs sections de surface correspondantes, qui sont agencées selon un angle les unes par rapport aux autres ou dans plusieurs plans parallèles.
